# EUROPEAN PATENT SPECIFICATION

(11) **EP 1 309 635 B1**
(45) Date of publication and mention of the grant of the patent: **08.06.2005**
(21) Application number: 00958397.2
(22) Date of filing: 03.08.2000
(51) Int. Cl.: C08F 220/04, C08F 220/18, C08F 2/16, C09D 5/02

(54) **AQUEOUS COPOLYMER THICKENER COMPOSITIONS**
WÄSSERIGE COPOLYMERE VERDICKER-MISCHUNGEN
COMPOSITIONS AQUEUSES D'AGENT EPAISSISSANT DE COPOLYMERE

(43) Date of publication of application: 14.05.2003
(73) Proprietor: Imperial Chemical Industries PLC, London W1U 3AN (GB)
(72) Inventor: CRAUN, Gary, Pierce, Berea, OH 44017 (US); HAHN, Kenneth, George, Hinckley, OH 44233 (US)
(86) International application number: PCT/EP2000/007677
(87) International publication number: WO 2002/012360

(56) References cited:
- EP-A- 0 707 110
- US-A- 3 915 921
- US-A- 4 226 754
- US-A- 4 849 480

## Description

This invention relates to copolymers of ethylenically unsaturated acid monomers with hydrophobic ester monomers useful as associative thickeners in aqueous compositions such as aqueous coating compositions, for example, paints, varnishes or woodstains. It also relates to a process for obtaining the compositions.

Waterborne compositions such as waterborne paint coatings can be low in viscosity making them difficult to use. Application of such low viscosity coating compositions to vertical surfaces can be very difficult or impossible as they tend to run and sag resulting in unsightly appearance and/or uneven coverage. In the case of compositions applied by brush, such as paint coatings, low viscosity can also be problematic as the user is unable to pick up sufficient coating on the brush without it dripping off. Consequently, only very small areas of substrate may be covered before the brush needs to be loaded again. Such low brush loading is both inconvenient and unproductive.

Paint coatings provide both protection and decoration to articles and structures. A paint coating normally comprises a synthetic organic copolymer binder, fillers, extenders, pigments and conventional paint additives including biocides, antifoaming agents or coalescing solvents. In the dried paint film, the polymeric binder binds the insoluble components, such as the pigments and fillers together and provides adhesion of the dried paint film to the substrate. Modification of the polymer binder allows the properties of the paint to be tailored to particular applications. The pigments and fillers may be organic or inorganic and contribute to colour and opacity and other optical effects, in addition to hardness and durability. Some paint coatings contain little or no opacifying pigments and can be described as clearcoats or varnishes.

In order to overcome the problem of low viscosity and poor application properties in waterborne compositions in general and paint coatings in particular, it is known to add materials such as polymeric thickeners which increase the viscosity of the composition.

Polymeric thickeners fall into a number of categories. There are the water soluble polymers such as the natural gums and resins, for example gum arabic and sodium alginate and the synthetic types such as polyvinyl alcohol, numerous cellulose derivatives including carboxy methyl cellulose, hydroxy ethyl cellulose (HEC) and polyacrylamide. A related group of the synthetic polymers is the group consisting of polymers rendered water soluble by virtue of neutralised acid groups such as salts of polyacrylic acid and polymethacrylic acid.

It is thought that such water soluble polymer types increase viscosity of aqueous formulations by entanglement of portions of adjacent polymer chains.

Another important class of resinous thickeners are the microgel alkali swellable emulsion thickeners. These are typically very high acid content, internally crosslinked polymer microparticles dispersed in aqueous medium which on addition of base swell substantially as a result of water and solvent ingress. The resulting increase in volume occupied by the swollen particles causes the viscosity to rise. Examples of such thickeners are ASE 60, ASE 75 (available from Rohm and Haas, Philadelphia, USA) and the like.

A third class of water soluble thickeners is the associative thickeners. These are copolymers containing both hydrophobic and hydrophilic groups typically in a comb configuration comprising a backbone and pendant side chains. The backbone is a hydrophilic polymer comprising water solubilising groups. The side chains (or "teeth" of the comb) are hydrophobic, typically containing long alkyl chains, and directly attached to the backbone. Stearyl methacrylate is a useful such hydrophobic monomer. An alternative to this is where the hydrophobic sidechains are attached to the backbone via a long hydrophilic group. Examples of associative thickeners are non ionic hydrophobically modified ethylene oxide urethane (known as HEUR), hydrophobically modified alkali soluble emulsion (known as HASE) and hydrophobically modified hydroxyethylcellulose (known as HMHECS)

Associative thickeners are thought to cause thickening by the association of the hydrophobic portions of one thickener molecule with the hydrophobic portions of another thickener molecule. The presence of other hydrophobic polymer molecules either in solution or as microparticles offers further opportunities for association to create a large interconnecting three dimensional network and hence a rise in viscosity. The precise nature of the association is not clear, but it is thought that van der Waals forces are involved.

Typically, associative thickeners are made by a process known as emulsion polymerisation. The conventional emulsion polymerisation process involves the addition polymerisation of water immiscible ethylenically unsaturated monomers using a polymerisation initiator in the presence of surfactant in water. It is thought that such immiscible monomers are present in the water predominantly as droplets of approximately 200 microns in diameter. Additionally, lesser portions of these monomers will be dissolved in the water. On raising the temperature, polymerisation begins in the water phase producing substantially water soluble copolymer molecules which, as polymerisation continues, increase in molecular weight until they become completely insoluble in the water and consequently precipitate to form the polymer particles. As polymerisation proceeds further, monomer migrates from the large monomer droplets through the water phase and into the particles, eventually consuming the available monomer to form the copolymer microparticles of the dispersion, of diameter up to about five microns stabilised by surfactant. The microparticles so formed are ordinarily of substantially uniform copolymer composition. By uniform composition is meant that all of the microparticles comprise substantially the same monomer units in type and proportion.

Although the monomers in conventional emulsion polymerisation are substantially immiscible in water, it is essential that they have at least a minimum solubility in water in order for polymerisation to take place. It is thought that this is because the polymerisation initiator used in emulsion polymerisation is water soluble and thus can only initiate polymerisation effectively in the water phase. This creates a problem for monomers such as stearyl methacrylate which are important in providing a comb copolymer of pendant side chains of the correct hydrophobicity. Monomers such as stearyl methacrylate have very low water solubility and cannot therefore effectively copolymerise with other more water soluble monomers using this process. Additionally, the migration of such hydrophobic monomers from the large monomer droplets, through the water phase and into the copolymer microparticles where polymerisation substantially takes place, is very inefficient. This results in such monomers remaining largely or partly unpolymerised. Where there is polymerisation of the hydrophobic monomer, it only occurs to a small extent and typically takes place in the large monomer droplets, leading to very large polymer particles which are unstable, in that they precipitate, and contribute to reactor fouling during polymerisation. Furthermore, as the more watersoluble monomers copolymerise largely in the absence of the water insoluble monomer, the copolymer composition thus formed will differ from that produced by polymerisation in the large monomer droplets, which is rich in the water insoluble monomer. This results in a dispersion comprising microparticles of differing copolymer composition. The thickening properties of such a dispersion are poor since the monomers are not used effectively to form the preferred comb structure.

In a variant of the conventional emulsion polymerisation process water insoluble monomers can be polymerised by emulsion polymerisation by adding large amounts of water compatible volatile solvents, such as alcohols to the water to increase the water solubility of essentially hydrophobic monomers such as stearyl methacrylate so that polymerisation in the aqueous phase (comprising substantially water and lesser amounts of solvent) can take place. However, such solvents are also effective chain transfer agents and reduce the molecular weight as well as altering the structure of the resulting copolymer compared to that produced when polymerisation takes place in water. Ordinarily, such a process is preferred for producing copolymer of molecular weight less than 100,000 (as measured by Gel Permeation Chromatography) but this leads to poor water resistance and reduced thickening properties. Furthermore, to meet modern environmental standards the volatile organic solvent in such compositions must first be removed, producing waste requiring disposal.

Where lower amounts of solvents are used in an attempt to reduce the quantity of volatile organic solvent in the dispersion, the solubility of the hydrophobic monomer remains insufficient to produce copolymer microparticles of uniform composition

By virtue of their high acid content, all of the above mentioned thickener types are water sensitive and consequently they induce poor water resistance in dried formulated products such as coatings or adhesives. This can manifest itself in various ways. For example when the dried coating is scrubbed in the presence of water, it partly dissolves. Alternatively blisters appear following continued exposure to water or high humidity. Indeed, the poor water resistance of the thickeners limits the amount of thickener that can be added to waterborne products to a few parts per hundred.

Attempts to improve the performance of the associative thickeners have been made. United States patent specification US 3 915 921 issued in 1975 discloses copolymer compositions of ethylenically unsaturated monomer containing a carboxylic acid group and up to 50% of long chain alkyl acrylate monomers where the long chain alkyl moiety contains from 10 to 30 carbon atoms. The presence of the highly hydrophobic long chain alkyl moieties means that the copolymer has to be made in benzene and subsequently recovered by centrifugation. Such copolymers are inconvenient and costly to make as they must be separated from the organic solvent prior to use. They also cause considerable water sensitivity in the dry paint films, presumably due to the high acid content.

European patent EP 0 707 110 A1, published in 1996 describes an aqueous acrylic copolymer for use in paper sizing compositions. The composition comprises about 60% acrylic acid, 10% stearyl methacrylate, 30% butyl acrylate and a minor amount of chain transfer agent. This copolymer is prepared by substantially the same method as the conventional aqueous emulsion polymerisation process described above. The resulting dispersion of acrylic copolymer microparticles does not have uniform polymer composition, exhibits poor thickening properties and, if used in paint causes poor water resistance in the dried paint film. This is because the stearyl methacrylate monomer is insufficiently water soluble to diffuse from the large monomer droplets into the aqueous phase and copolymerise efficiently with the more water soluble monomers. It is thought that this inefficient polymerisation produces copolymer compositions which do not have the correct proportions of the hydrophobic and hydrophillic monomers, producing in turn poor associative thickeners as a result.

It has now been discovered that aqueous dispersions of copolymer microparticles containing a portion of substantially water insoluble monomer can be made which are of high molecular weight, uniform composition, have improved thickening properties and are substantially solvent free. Such dispersions are useful as thickening agents in waterborne compositions generally, and paint compositions specifically. The dried paint films containing such thickeners are of improved water resistance.

Accordingly, this invention provides an aqueous dispersion of polymeric microparticles, useful as an associative thickener, comprising copolymerised ethylenically unsaturated monomers in amounts by weight (based on the total weight of the copolymer) of
i) from 10 to 90% carboxyl functional monomer
ii) from 1 to 50% long chain alkyl ester of acrylate or methacrylate monomer where the alkyl chain contains at least 11 carbon atoms and preferably up to 22 carbon atoms
iii) from 0 to 89% short chain acrylate or methacrylate monomer selected from methyl acrylate, ethyl acrylate, methyl methacrylate and/or ethyl methacrylate and
iv) optionally other ethylenically unsaturated monomers
wherein the microparticles of the dispersion are of average particle diameter from 0.01 to 5 microns and substantially of uniform copolymer composition and the volatile organic solvent level is from 0 to 1% by weight (based on the total weight of the dispersion).

Preferably the level of volatile organic solvent is from 0 to 0.5%, more preferably from 0.01 to 0.3% and most preferably from 0.05% to 0.2%. Lower levels are preferred as the volatile organic solvent is a cosurfactant enhancing the effectiveness of the surfactant in stabilising the microparticles. At higher levels it is much less effective as a cosurfactant.

The carboxyl groups of the aqueous dispersion can be at least partially neutralised especially when it is used to thicken aqueous compositions. However, it is most convenient, especially for transport purposes and handling in general, when the aqueous dispersion is substantially in unneutralised form as it's viscosity is, relatively speaking, low. This low viscosity allows the aqueous dispersion to be filled into large containers at higher solids content than would otherwise be possible minimising transport and storage costs.

The number average particle diameter size of the unneutralised aqueous dispersion is from 0.01 to 5, preferably from 0.1 to 3 microns and more preferably 0.1 to 1 microns. The lower particle sizes are preferred as these produce smoother films, especially when applied as thin paint films.

Preferably the molecular weight of the copolymer is from 100,000 to 5,000,000, more preferably from 150,000 to 3,500,000 and most preferably from 120,000 to 3,000,000.

Useful carboxyl functional monomers are carboxyl functional ethylenically unsaturated monomers including acrylic, methacrylic, ethacrylic and similar lower alkyl substituted acrylic acids. Methacrylic acid is preferred. Other useful acids include maleic acid and fumaric acid.

Referring next to the long chain alkyl acrylate or methacrylate monomers, particularly useful monomers are substantially water insoluble and hydrophobic. Suitable examples include an acrylic or methacrylic acid ester of an aliphatic alkyl chain having from 11 to 22 or higher carbon atoms including lauryl acrylate or methacrylate, tetradecyl acrylate or methacrylate, cetyl acrylate or methacrylate and stearyl acrylate or methacrylate, as well as myristyl, decyl, palmitic, oleic, hydroxyldecyl and similar long chain aliphatic acrylates or methacrylates. Of these, stearyl methacrylate is most preferred.

In a preferred aspect of this invention, the monomer mixture includes between 20% and 90% of short chain acrylate or methacrylate selected from methyl acrylate or ethyl acrylate, or methyl methacrylate, or ethyl methacrylate, where ethyl acrylate is preferred. These short chain lower alkyl esters cause the polymeric thickeners according to this invention to be more hydrophilic, allowing increased thickening and reduced water sensitivity in the dried film.

Other ethylenically unsaturated monomers which can be optionally mixed with the above described monomers include polymerisable ethylenically unsaturated monomers such as vinyl monomers, acrylic monomers different from those mentioned above, allylic monomers and acrylamide monomers. Vinyl esters include vinyl acetate, vinyl propionate, vinyl butyrates, vinyl benzoates, vinyl isopropyl acetates and similar vinyl esters; vinyl halides include vinyl chloride, vinyl fluoride and vinylidene chloride; vinyl aromatic hydrocarbons include styrene, methyl styrenes and similar lower alkyl styrenes, chlorostyrene, vinyl toluene and vinyl naphthalene; vinyl aliphatic hydrocarbon monomers include alpha olefins such as ethylene, propylene, isobutylene and cyclohexene as well as conjugated dienes such as 1,3-butadiene, methyl-2-butadiene, 1,3-piperylene, 2,3 dimethyl butadiene, isoprene, cyclohexadiene, cyclopentadiene and dicyclopentadiene. Vinyl alkyl ethers include methyl vinyl ether, isopropyl vinyl ether, n-butyl vinyl ether and isobutyl vinyl ether. Acrylic monomers include monomers such as alkyl esters of acrylic or methacrylic acid having an alkyl ester portion containing between 3 to 10 carbon atoms as well as aromatic derivatives of acrylic and methacrylic acid. Useful acrylic monomers include, for example, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, various glycidyl ethers reacted with acrylic and methacrylic acids, hydroxyl alkyl acrylates and methacrylates such as hydroxyethyl and hydroxy propyl acrylates and methacrylates and amino acrylates and methacrylates.

In a preferred aspect of this invention, up to 5%, preferably between 1 ppm and 1% by weight of the ethylenic monomers copolymerised can comprise a divinyl crosslinking monomer. Useful divinyl monomers include divinyl benzene, hexanedioldiacrylate, diallyl phthlate and allyl esters of pentaerythritol. Crosslinking raises the molecular weight of the copolymer and helps to increase the thickening effect obtained from such aqueous dispersions. When such crosslinking monomers are used, the microparticles are substantially insoluble in organic solvents and as such the molecular weight of the copolymer comprising the microparticles cannot be determined with any certainty.

It is also an aspect of this invention to provide a process for obtaining the thickener compositions.

Accordingly, this invention further provides a process for producing an aqueous dispersion of copolymer microparticles which comprises
a) forming an aqueous miniemulsion of droplets of a mixture of ethylenically unsaturated monomers of number average droplet diameter size up to 5 microns, in the presence of surfactant, which mixture comprises on a weight basis (based on the total weight of the mixture)
   i) from 10 to 90% carboxyl functional monomer
   ii) from 1 to 50% long chain alkyl ester of acrylate or methacrylate monomer where the alkyl chain contains at least 11 carbon atoms
   iii) from 0 to 89% short chain acrylate or methacrylate monomer selected from methyl acrylate, ethyl acrylate, methyl methacrylate and ethyl methacrylate and
   iv) optionally other ethylenically unsaturated monomers
b) causing said miniemulsion to copolymerise and form a dispersion of copolymer microparticles and
c) optionally, at least partially neutralising the dispersion with base.

Each of the droplets of the miniemulsion contain the same monomer mixture. It is thought that due to their small size, a very large number of monomer droplets is generated by the mini emusification process. The polymerising polymer, although initiated in the aqueous phase, transfers to the droplets where it continues to completion. This transfer to the droplets is favoured by the very high surface area of the very large number of small monomer droplets. The resulting copolymer microparticles are found to be of uniform copolymer composition, in contrast to those obtained by the conventional emulsion polymerisation process described above.

In a preferred aspect of the process the ethylenically unsaturated monomers i), ii), iii) and iv) are added to a vessel containing water and surfactant, whilst gently stirring, so as to form a macroemulsion. This macroemulsion is micronised to form the miniemulsion of droplets having a droplet size less than 5 microns. The monomers in the droplets are then caused to copolymerise and form an aqueous dispersion of copolymer microparticles having a number average particle diameter size of less than 5 microns which copolymer is found to have a molecular weight of at least 100,000.

Preferably the monomers are mixed prior to addition to the aqueous phase as this promotes the formation of a miniemulsion of more uniform monomer composition.

Equipment effective in producing a miniemulsion from the macroemulsion should be able to impart high shear to the macro emulsion. Suitable examples of such devices are mechanical emulsifiers such as a Ross 100 (available from Ross and Son, Hauppauge, New York, USA) or a Silverson or an IKA emulsifier (available from IKA-Works Inc, Cincinnati, OHIO, USA). Alternatively, a Sonolator (available from Sonic Corp, Stratford, Connecticut, USA) may be used which uses ultrasound to generate the required shear.

The process avoids the need to use volatile organic solvents and so these can be excluded. However small amounts of certain low molecular weight volatile organic solvents such as alcohols behave as cosurfactants, and have the effect of improving the stability of the miniemulsion especially during polymerisation and can be added if desired. Suitable examples of such cosurfactants include n-butanol, n-hexanol, n-octanol, 2-ethylhexanol, branched aliphatic alcohols of about 5 to 12 carbons, glycol ethers such as ethylene monobutyl and monohexyl ether and the like.

The surfactants used to stabilise the monomer miniemulsion and the copolymer microparticles may be ionic or non-ionic. Examples of suitable ionic surfactants include the sulphates such as sodium lauryl sulphate; the sulphonates such as sodium dodecyl benzene sulphonate; and the sulphosuccinates such as sodium dioctyl sulphosuccinate. Additionally and optionally, cosurfactants may be used as part of the surfactant as described above. Ordinarily, surfactants are used at levels of from 0.1 to 5% by weight based on the weight of the monomers to be polymerised.

The surfactant stabilises the monomer droplets of the miniemulsion preventing them from coalescing prior to copolymerisation. The surfactant also stabilises the copolymer microparticles.

The resulting aqueous miniemulsion of ethylenically unsaturated monomers can contain up to about 90% by weight water. The monomers are copolymerised by means of a free radical initiator to form an aqueous dispersion of dispersed copolymer microparticles of number average particle size less than 5 microns and preferably between 0.1 and 1.0 micron.

Typical peroxide initiators include hydrogen peroxide, t-butyl hydroperoxide, Di-t-butyl peroxide, benzoyl peroxide, benzoyl hydroperoxide, 2,4-dichlorobenzoyl peroxide, t-butyl peracetate, while useful persulphates include ammonium persulphate, sodium persulphate, potassium persulphate, sodium perphosphate and potassium or sodium persulphate or perphosphate and redox initiators such as sodium persulphate-sodium formaldehyde sulfoxylate, cumene hydroperoxide-sodium metabisulphite, potassium persulphate-sodium bisulphite and cumene hydroperoxide-iron (II) sulphate. Initiators soluble in the monomers such as lauroyl peroxide can also be used. Initiators ordinarily are added at levels between 0.1% and 5% based on the weight of ethylenically unsaturated monomers copolymerised. Alternatively, redox initiator combinations such as ascorbic acid and hydrogen peroxide may be used. Metal salts such as copper, chromium and iron salts can be added when redox pairs are used to promote polymerisation.

A preferred process is to add, gradually or stepwise, the miniemulsion of ethylenically unsaturated monomers and the polymerisation initiator into the reactor vessel over a period of from 2 to 6 hours, preferably from 2 to 4 hours. This allows for improved control of the reaction and minimises the risk of a runaway reaction.

The polymerisation is carried out by heating the mixture to a temperature typically from 30 to 98°C, preferably from 40 to 90°C.

If required, the resulting aqueous dispersion of carboxyl functional copolymer microparticles is then neutralised with base and can be diluted with additional water if desired to form a dilute thickener dispersion containing by weight preferably between 50% and 99% water.

Examples of suitable bases include alkali metal hydroxides, ammonia, or ammonium hydroxide, or amine, or mixtures thereof, but where ammonium hydroxide is preferred. Useful amines include monoethanol amine, dimethyl ethanol amine, diethanol amine, triethyl amine, dimethylaniline and similar primary, secondary and tertiary amines. Neutralisation of about 50% to 100% of the carboxyl functionality is preferred, especially above 60%, and 100% is most preferred. Neutralisation of the thickener prior to use allows for more rapid attainment of final and stable viscosity in the fully formulated composition

Brookfield viscosities of the neutralised thickener dispersion at 100% neutralisation with ammonia at 2% polymer solids in water should be above about 0.1 Pa.s, desirably above 1 Pa.s, and preferably between 2 Pa.s and 20 Pa.s.

The resulting neutralised aqueous dispersion of polymer microparticles according to this invention is especially useful as associative thickener and pigment dispersant in aqueous compositions, particularly aqueous coating compositions such as paint and more particularly where the film forming binder is itself a dispersion polymer.

Accordingly, the invention also provides an aqueous coating composition wherein the composition contains an associative thickener comprising aqueous dispersion of preferably at least partially neutralised copolymer microparticles as described above.

The coating composition can also contain other ingredients that are standard for coatings such as film-forming polymer, pigments, dispersants, extenders, crosslinking agents, anti foams, coalescing aids, flow aids and biocides.

The pigment can be any pigment or mixture of pigments suitable for use in an aqueous composition such as a solid colour pigment, a metallic pigment or a pearlescent pigment. Preferably the pigment is titanium dioxide.

The manufacture of paint coatings involves the preparation of a polymeric binder, mixing of other component materials, including the associative thickener according to this invention and dispersing of pigments. High speed dispersers or dissolvers are typically used in the dispersing step to intersperse the pigments into the liquid phase. The binder and pigment dispersion can be thoroughly and uniformly mixed with raw batch ingredients by homogenising the binders, pigmentary solids, plasticisers, associative thickener of this invention and other components to form a uniform mixture. Pigments can be any pigment or mixture of pigments suitable for use in an aqueous composition and include opacifying pigments such as titanium dioxide, zinc oxide and metal flake pigments such as aluminium and bronze, as well as tinting pigments such as carbon black, yellow oxides, brown oxides, tin oxides, raw and burnt sienna or amber, chromium oxide green, phthalocyanine green, phthalonitrile blue, ultramarine blue, cadmium pigments, chromium pigments, pearlescent and the like. Filler pigments such as clay, silica, talc, mica, wollastonite, wood flower and the like can be added as desired..

In accordance with this invention, the associative thickener ordinarily is added to the copolymer binder at a level of 0.5% to 10% and preferably between 1% and 4% based on the weight of liquid paint solids. The level of thickener is determined by the rheological properties desired in the paint.

This invention is further illustrated by the following examples, of which Examples A,B,C and D are comparative.

### EXAMPLE 1

An acrylic polymeric associative thickener of uniform copolymer composition and molecular weight greater than 100,000, was produced in accordance with this invention from the following raw materials:

| | **Weight** | **Raw Materials** |
|---|---|---|
| Mixture a) | 200g | water |
| | 2.5g | Aerosol OT-75 surfactant |
| | | |
| Mixture b) | 25g | stearyl methacrylate |
| | 75g | methacrylic acid |
| | 150g | ethyl acrylate |
| | 1.0g | n-hexanol |
| c) | 530g | water |

Mixtures (a) and (b) were mixed together and emulsified on a Ross ME-100 (available from Ross and Son, Hauppauge, New York, USA) for 5 minutes at maximum speed to produce droplets of less than five microns. Component (c) was added at low speed and the miniemulsion was purged in a 2 litre flask 1 hour at 70°C. After, 1.3g ammonium persulphate was added in 15g water to initiate polymerisation. The mixture was held at 70°C for 3 hours and then cooled to room temperature. A dispersion of uniform copolymer microparticles of less than five microns was obtained.

The resulting aqueous dispersion of copolymer microparticles was fully neutralised by placing 100g of the dispersion in a flask and adding 5.5g ammonia (28%) in 1144g water. The Brookfield Viscosity was 6.6 Pa.s measured using spindle No. 3 at 10 rpm.

### EXAMPLE 2

An acrylic polymeric thickener was prepared as in Example 1, but ethyl acrylate was replaced with butyl acrylate. Neutralisation at 2.5% by weight solids gave a Brookfield viscosity of 43 Pa.s. measured at 1 rpm

### COMPARATIVE EXAMPLE A

Preparation of a thickener by a conventional latex process for comparison purposes.

| | | |
|---|---|---|
| Mixture a) | 0.6 | n-hexanol |
| | 18.4 | stearyl methacrylate |
| | 48.8 | methacrylic acid |
| | 82.4 | ethyl acrylate |
| | | |
| Mixture b) | 423 | water |
| | 3.0 | Aerosol OT-75 surfactant |
| | | |
| Mixture c) | 0.8 | ammonium persulphate |
| | 16 | water |

Mixture b) was heated to 75°C in a flask and purged with nitrogen. 20 grams of Mixture a) were added followed by Mixture c). The contents of the flask were held at 75°C for 30 minutes and then the rest of Mixture a) was added over 3 hours. The contents of the flask were held at 75°C for a further 1 hour and cooled. The thickener in this Example A was prepared by a conventional emulsion polymerisation process and in particular the monomer mixture was not micronised in water to form a miniemulsion as in Examples 1 to 6.

### EXAMPLES 3-6

Preparation of thickeners with a range of monomer compositions were made according to the invention as follows:

| | | **Ex 3** | **Ex 4** | **Ex 5** | **Ex 6** |
|---|---|---|---|---|---|
| a) | water | 225 | 225 | 225 | 225 |
| Mixture b) | water | 198 | 198 | 198 | 198 |
| | Aerosol | 3.0 | 3.0 | 3.0 | 3.0 |
| | OT-75 | | | | |
| | n-hexanol | 0.6 | 0.6 | 0.6 | 0.6 |
| stearyl | | 18.4 | - | 18.4 | 18.4 |
| methacrylate | | | | | |
| lauryl methacrylate | | - | 18.4 | - | - |
| methyl acrylate | | - | - | 62.4 | - |
| butyl acrylate | | - | - | 20 | - |
| ethyl acrylate | | 82.4 | 82.4 | - | 82.4 |
| methacrylic acid | | 48.8 | 48.8 | 48.8 | 48.8 |
| divinyl benzene | | 0.06 | - | - | - |

Component a) was warmed to 75°C in a flask with a nitrogen purge. Mixture b) was miniemulsified by micronising for 5 minutes using a Ross ME-100 emulsifier at maximum speed to produce droplets of less than five microns. 35g of the miniemulsion was added to the flask, followed by 0.8g ammonium persulphate in 16g water. The contents of the flask were held at 75°C for 30 minutes. The remainder of Mixture b) was fed in over 1.5 hours and then held for a further 1 hour and then cooled. Copolymer microparticles of molecular weight greater than 100,000 and uniform composition were obtained. The particle size of the microparticles was found to be less than five microns.

The experimental paints in the following examples demonstrate the utility of the aqueous dispersion of copolymer microparticles of the invention as pigment dispersants and as paint thickeners.

### EXAMPLE 7 and COMPARATIVE EXAMPLE B

A standard good quality flat paint was prepared by standard paint-making methodology (Example B) and compared with one made using the same procedure and components, except that in the second example (Example 7) the low molecular weight pigment dispersant, that is sodium salt of carboxylic acid functional oligomer, and a significant part of the thickener (HEUR) was replaced by the thickener of the invention. Water, dispersants, thickeners, surfactants, defoamers and additives were charged to a conventional high-speed dispersion mixer. Enough water is used to provide a viscosity which will give adequate shear to disperse the pigments. Pigments are added with good mixing and exposed to high shear for several minutes until a good dispersion is achieved. Following this, latex binder, thickeners, defoamers and coalescing solvent are added, along with enough water to achieve the desired paint viscosity for proper application.

The paints in this Example 7, in accordance with this invention, contain the following materials:

| | COMPARATIVE EXAMPLE B | EXAMPLE 7 |
|---|---|---|
| | **Good Quality Commercial Flat Paint** | **Good Quality Experimental Flat Paint** |
| Water | 380 | 387.7 |
| Natrosol Plus 330 | 1.75 | 0.75 |
| 28% ammonia water | 0.50 | 2.50 |
| Bactericide | 1.50 | 1.50 |
| Sodium salt of polymeric carboxylic acid | 8.0 | 0.0 |
| Thickener of Example 6 | 0.0 | 8.0 |
| Disodium Phosphate | 2.0 | 2.0 |
| | | |
| Nonylphenol ethoxylate surfactant | 3.0 | 3.0 |
| Defoamers | 6.0 | 4.5 |
| Calcined Kaolin | 182.3 | 182.3 |
| Magnesium silicate | 133.6 | 133.6 |
| Magnesium aluminium silicate | 4.0 | 4.0 |
| | | |
| Rutile Titanium Dioxide | 168.0 | 168.0 |
| HEUR Thickeners | 24.0 | 6.0 |
| Propylene glycol | 10.0 | 10.0 |
| Coalescing solvent | 10.0 | 10.0 |
| PVA latex | 203.9 | 203.9 |

Liquid paint specifications and performance are follows:

| | | |
|---|---|---|
| Volume solids | 32.4% | 32.4% |
| Pigment volume concentration | 56.7% | 56.7% |
| Stormer Viscosity (KU) | 107 | 90 |

The Stormer viscosity of the experimental paint of this invention is slightly lower but well within the acceptable commercial range and has a useful pleasant consistency. Physical properties on dried 75 micron films are follows:

| | | |
|---|---|---|
| Contrast ratio | 0.9770 | 0.9770 |
| Roller applications to 12sq.ft. (Grams) | 120 | 116 |
| Flow and levelling | Fair | Fair |
| Shim scrubs | Standard | 120% of standard |
| Note that the water resistance of Example 7, as measured by the Shim scrubs test (ASTM 2486) is significantly improved over the paint of Comparative Example B. | | |

### EXAMPLE 8 and COMPARATIVE EXAMPLE C

Following the procedure in Example 7 above, acceptable fair quality low gloss, flat paints were made as follows:

| | COMPARATIVE EXAMPLE C | EXAMPLES 8 |
|---|---|---|
| | **Commercial Flat Paint** | **Experimental Flat Paint** |
| Water | 615 | 607 |
| Natrosol Plus 330 | 8.80 | 3.90 |
| 28% ammonia water | 1.55 | 2.55 |
| Bactericide | 1.50 | 1.50 |
| Sodium salt of polymeric carboxylic acid | 4.50 | 0.0 |
| Thickener of Example 6 | 0.0 | 8.0 |
| Disodium Phosphate | 1.50 | 1.50 |
| Nonylphenol ethoxylate surfactant | 3.00 | 3.00 |
| Defoamers | 5.00 | 4.00 |
| Calcined Kaolin | 155.0 | 155.0 |
| Magnesium Silicate | 85.1 | 85.1 |
| Magnesium Aluminum Silicate | 5.00 | 5.00 |
| Rutile Titanium Dioxide | 53.5 | 53.5 |
| Coalescing solvent | 5.5 | 5.5 |
| PVA latex | 90.0 | 97.4 |

Liquid paint specification and performance as follows:

| | **Commercial Flat Paint** | **Experimental Flat Paint** |
|---|---|---|
| Volume solids | 20% | 20% |
| Pigment volume concentration | 63.7% | 63.7% |
| Stormer Viscosity (KU) | 101 | 95 |
| Contrast ratio | 0.9590 | 0.9590 |
| Roller application to 12sq.ft (grams) | 100 | 110 |
| Flow and levelling | Fair | Fair |
| Shim scrubs | Standard | 150% of Standard |

The Stormer viscosity of the experimental paint is slightly lower but well within the commercial range and has a useful pleasant consistency.

Note that the water resistance of Example 8, as measured by the Shim scrubs test is significantly improved over the paint of Comparative Example C.

After one week at 60°C storage, the viscosity of the paint of Example 8 was essentially stable, which was surprising and unusual for neutralised thickeners. This was equivalent to the stability of the commercial standard paints in the examples.

### EXAMPLE 9

In another example of the utility of the aqueous dispersions of the invention as associative thickener in paint coatings, a similar paint composition to Example 8 was made, at a Stormer viscosity of about 140 KU. Different amounts of water were added to samples of the paint to demonstrate how the unusual rheology would permit reduction with high levels of water, compared with conventional latex paints.

Professional painters often dilute paint at the job site to maximise its utilisation, but conventional paints become too thin to use when as little as 10% extra water is added. In that state the reduced paint will not apply well by brush or roller and tends to sag and run down the wall if applied by spray. If left in the can unstirred, a conventional paint exhibits heavy settling within 1 - 2 hours. Water dilutions of 15 to 20% of paints containing conventional latex paints produce unuseable paints.

In contrast, latex paints made with the thickener of this invention can be diluted with water considerably and still produce a useful latex paint.

| Paint/water ratio | 5/1 | 5/2 | 5/3 | 5/4 | 5/5 |
|---|---|---|---|---|---|
| Viscosity (KU) | 86 | 63 | 54 | <53 | <53 |
| ICI Viscosity (Pa.s) | 0.062 | 0.042 | 0.032 | 0.024 | 0.020 |
| In-can settling overnight | None | None | None | None | None |
| Thickness before sagging on sealed Leneta paper (µm) | >305 | >305 | >305 | 230 | 150-180 |

Brush application is good, even at 5/4 reduction, which demonstrates that the paint of this invention can be adjusted as desired at the application site to levels much beyond those of conventional paints.

### EXAMPLES 10 TO 13 AND COMPARATIVE EXAMPLE D

Paints were prepared with thickeners of Examples 2 to 6 as in Example 7. The Stormer viscosities (described in ASTM 562) and ICI cone and plate viscosities (measured at a shear rate of 10,000 s⁻¹) were measured. Additional thickener was added as needed until the paint had a Stormer viscosity of about 95 KU or a little higher. The percent ammonia added was in the form of 28% aqueous solution.

| **Example** | **Thickener Example** | **% Thickener** | **Stormer Viscosity KU** | **ICI Viscosity Pa.s** | **Percent of ammonia added** |
|---|---|---|---|---|---|
| D | A | 9.9 | 115 | 0.06 | 2% |
| 10 | 3 | 3.3 | 95 | 0.06 | 1% |
| 11 | 4 | 6.6 | 134 | 0.07 | 2% |
| 12 | 5 | 5.3 | 127 | 0.06 | 1.5% |
| 13 | 6 | 3.3 | 94 | 0.07 | 0.5% |

Thickener Example A (a comparative example) is identical to thickener Example 6, except that thickener Example A was prepared by conventional emulsion polymerisation while thickener Example 6 was made according to this invention. Three times as much thickener was needed with the thickener from Example A to achieve similar paint viscosity. For instance, 6.6% of thickener Example A did not give an acceptable Stormer viscosity. Example A is clearly an inferior thickener made outside the scope of this invention.

## Claims

1. An aqueous dispersion of copolymeric microparticles, useful as an associative thickener, comprising copolymerised ethylenically unsaturated monomers in amounts by weight (based on the total weight of the copolymer) of
i) from 10 to 90% carboxyl functional monomer
ii) from 1 to 50% long chain alkyl ester of acrylate or methacrylate monomer where the alkyl chain contains at least 11 carbon atoms
iii) from 0 to 89% short chain acrylate or methacrylate monomer selected from methyl acrylate, ethyl acrylate, methyl methacrylate and/or ethyl methacrylate and
iv) optionally other ethylenically unsaturated monomers
wherein the microparticles of the dispersion are of average particle diameter of from 0.01 to 5 microns and of substantially uniform copolymer composition and the volatile organic solvent level is from 0 to 1% by weight (based on the total weight of the dispersion)

2. The aqueous dispersion according to Claim 1 wherein the weight average molecular weight is from 100,000 to 5,000,000.

3. The aqueous dispersion according to Claim 1 or Claim 2 wherein from 20 to 89% by weight of copolymerised ethylenically unsaturated monomers comprise monomers iii).

4. The aqueous dispersion according to any of the preceding Claims wherein the alkyl chain of monomers ii) contains from 11 to 22 carbon atoms.

5. The aqueous dispersion according to any of the preceding Claims wherein from 1ppm to 5% by weight of the copolymerised ethylenically unsaturated monomers comprise divinyl monomer.

6. The aqueous dispersion according to Claim 5 wherein the divinyl monomer comprises from 1 ppm to 1%.

7. The aqueous dispersion according to any of the preceding Claims wherein the carboxyl functional groups are at least partially neutralised.

8. A process for producing an aqueous dispersion of copolymer microparticles, useful as an associative thickener, which comprises
a) forming an aqueous miniemulsion of droplets of a mixture of ethylenically unsaturated monomers of average droplet diameter size up to 5 microns in the presence of surfactant, which mixture comprises on a weight basis (based on the total weight of the mixture)
i) from 10 to 90% carboxyl functional monomer
ii) from 1 to 50% long chain alkyl ester of acrylate or methacrylate monomer where the alkyl chain contains at least 11 carbon atoms
iii) from 0 to 89% short chain acrylate or methacrylate monomer selected from methyl acrylate, ethyl acrylate, methyl methacrylate and ethyl methacrylate and
iv) optionally other ethylenically unsaturated monomers
b) causing said miniemulsion to copolymerise and form a dispersion of copolymer microparticles and
c) optionally at least partially neutralising the dispersion with base.

9. A process for producing an aqueous dispersion copolymer microparticles, useful as an associative thickener, which comprises
a) adding to a vessel containing water and surfactant, monomers comprising
i) from 10 to 90% carboxyl functional monomer
ii) from 1 to 50% long chain alkyl ester of acrylate or methacrylate monomer where the alkyl chain contains at least 11 carbon atoms
iii) from 0 to 89% short chain acrylate or methacrylate monomer selected from methyl acrylate, ethyl acrylate, methyl methacrylate and ethyl methacrylate and
iv) optionally other ethylenically unsaturated
b) forming a macroemulsion of monomers i), ii), iii) and iv) in water and surfactant
c) micronising the macroemulsion to form a miniemulsion of average droplet diameter size less than five microns
d) causing the miniemulsion to copolymerise and form an aqueous dispersion of high molecular weight copolymer microparticles having an average particle diameter size of less than five microns and
e) optionally at least partially neutralising with base

10. An aqueous coating composition wherein the composition contains the aqueous dispersion according to any of Claims 7, 8 and 9.

11. An aqueous coating composition according to Claim 10 wherein the composition also contains at least one component selected from the group consisting of film forming polymer, pigments, dispersants, extenders, crosslinking agents, anti foams, coalescing aids, flow aids and biocides.

## Patentansprüche

1. Wäßrige Dispersion von copolymeren Mikroteilchen, die als assoziatives Verdickungsmittel nützlich ist, die copolymerisierte ethylenisch ungesättigte Monomere in Gewichtsmengen (bezogen auf das Gesamtgewicht des Copolymeren) von
i) von 10 bis 90 % carboxylfunktionelles Monomer,
ii) von 1 bis 50 % langkettige Alkylester von Acrylat- oder Methacrylat-Monomer, wobei die Alkylkette wenigstens 11 Kohlenstoffatome enthält,
iii) von 0 bis 89 % kurzkettiges Acrylat- oder Methacrylat-Monomer, das ausgewählt ist aus Methylacrylat, Ethylacrylat, Methylmethacrylat und/oder Ethylmethacrylat, und
iv) gegebenenfalls andere ethylenisch ungesättigte Monomere umfaßt,
wobei die Mikroteilchen der Dispersion einen mittleren Teilchendurchmesser von 0,01 bis 5 µm und eine im Wesentlichen einheitliche Copolymerzusammensetzung aufweisen, und wobei der Gehalt an flüchtigem organischen Lösemittel von 0 bis 1 Gew.-% (bezogen auf das Gesamtgewicht der Dispersion) beträgt.

2. Wäßrige Dispersion nach Anspruch 1, wobei das gewichtsmittlere Molekulargewicht von 100.000 bis 5.000.000 beträgt.

3. Wäßrige Dispersion nach Anspruch 1 oder Anspruch 2, wobei von 20 bis 89 Gew.-% der copolymerisierten ethylenisch ungesättigten Monomeren Monomere ii) umfassen.

4. wäßrige Dispersion nach irgendeinem der vorausgehenden Ansprüche, wobei die Alkylkette der Monomeren ii) von 11 bis 22 Kohlenstoffatome enthält.

5. Wäßrige Dispersion nach irgendeinem der vorausgehenden Ansprüche, wobei von 1 ppm bis 5 Gew.-% der copolymerisierten ethylenisch ungesättigten Monomeren Divinylmonomer umfassen.

6. Wäßrige Dispersion nach Anspruch 5, wobei das Divinylmonomer von 1 ppm bis 1 % umfaßt.

7. Wäßrige Dispersion nach irgendeinem der vorausgehenden Ansprüche, wobei die carboxylfunktionellen Gruppen wenigstens teilweise neutralisiert sind.

8. Verfahren zur Herstellung einer wäßrigen Dispersion von Copolymer-Mikroteilchen, die als assoziatives Verdickungsmittel nützlich ist, das umfaßt
a) Bilden einer wäßrigen Miniemulsion aus Tröpfchen einer Mischung von ethylenisch ungesättigten Monomeren mit einer mittleren Tröpfchendurchmessergröße von bis zu 5 µm in Gegenwart eines Tensids, wobei die Mischung auf einer Gewichtsbasis (bezogen auf das Gesamtgewicht der Mischung)
i) von 10 bis 90 % carboxylfunktionelles Monomer,
ii) von 1 bis 50 % langkettigen Alkylester von Acrylat- oder Methacrylat-Monomer, wobei die Alkylkette wenigstens 11 Kohlenstoffatome enthält,
iii) von 0 bis 89 % kurzkettiges Acrylat- oder Methacrylat-Monomer, das aus Methylacrylat, Ethylacrylat, Methylmethacrylat und Ethylmethacrylat ausgewählt ist, und
iv) gegebenenfalls andere ethylenisch ungesättigte Monomere umfaßt,
b) Herbeiführen der Copolymerisation dieser Miniemulsion unter Bildung einer Dispersion von Copolymer-Mikroteilchen, und
c) gegebenenfalls wenigstens teilweises Neutralisieren der Dispersion mit Base.

9. Verfahren zur Herstellung einer wäßrigen Dispersion von Copolymer-Mikroteilchen, die als assoziatives Verdickungsmittel nützlich ist, das umfaßt
a) Zugeben zu einem Behälter, der Wasser und ein Tensid enthält, Monomere, die
i) von 10 bis 90 % carboxylfunktionelles Monomer,
ii) von 1 bis 50 % langkettigen Alkylester von Acrylat- oder Methacrylat-Monomer, wobei die Alkylkette wenigstens 11 Kohlenstoffatome enthält,
iii) von 0 bis 89 % kurzkettiges Acrylat- oder Methacrylat-Monomer, das aus Methylacrylat, Ethylacrylat, Methylmethacrylat, und Ethylmethacrylat ausgewählt ist, und
iv) gegebenenfalls andere ethylenisch ungesättigte Monomere umfaßt
b) Erzeugen einer Makroemulsion aus den Monomeren i), ii), iii) und iv) in Wasser und Tensid,
c) Mikronisieren der Makroemulsion unter Erzeugung einer Miniemulsion mit einer mittleren Teilchendurchmessergröße von weniger als 5 µm,
d) Herbeiführen einer Copolymerisation der Miniemulsion und Bildung einer wäßrigen Dispersion von hochmolekulargewichtigen Copolymer-Mikroteilchen mit einer mittleren Teilchendurchmessergröße von weniger als 5 µm, und
e) gegebenenfalls wenigstens teilweises Neutralisieren mit Base.

10. Wäßrige Anstrichzusammensetzung, wobei die Zusammensetzung die wäßrige Dispersion gemäß irgendeinem der Ansprüche 7, 8 und 9 enthält.

11. Wäßrige Anstrichzusammensetzung nach Anspruch 10, wobei die Zusammensetzung auch wenigstens einen Bestandteil enthält, der aus der Gruppe ausgewählt ist, die besteht aus filmbildendem Polymer, Pigmenten, Dispergiermitteln, Extendern, Vernetzungsmitteln, Antischaummitteln, Koaleszenzmitteln, Verlaufshilfsmitteln und Bioziden.

## Revendications

1. Dispersion aqueuse de microparticules copolymères, utile comme épaississant associatif, comprenant des monomères à insaturation éthylénique copolymérisés en des quantités en poids (sur la base du poids total du copolymère)
i) de 10 à 90 % d'un monomère à fonctionnalité carboxyle
ii) de 1 à 50 % de monomère ester alkylique à chaîne longue d'acrylate ou de méthacrylate dans lequel la chaîne alkyle contient au moins 11 atomes de carbone
iii) de 0 à 89 % d'un monomère acrylate ou méthacrylate à chaîne courte choisi entre l'acrylate de méthyle, l'acrylate d'éthyle, le méthacrylate de méthyle et/ou le méthacrylate d'éthyle, et
iv) facultativement d'autres monomères à insaturation éthylénique,
dans laquelle les microparticules de la dispersion ont un diamètre moyen de particule de 0,01 à 5 micromètres et ont une composition substantiellement uniforme en copolymère et la teneur en solvant organique volatil est comprise dans l'intervalle de 0 à 1 % en poids (sur la base du poids total de la dispersion).

2. Dispersion aqueuse suivant la revendication 1, dans laquelle la moyenne en poids du poids moléculaire est comprise dans l'intervalle de 100 000 à 5 000 000.

3. Dispersion aqueuse suivant la revendication 1 ou la revendication 2, dans laquelle une proportion de 20 à 89 % en poids des monomères à insaturation éthylénique copolymérisés comprend les monomères iii).

4. Dispersion aqueuse suivant l'une quelconque des revendications précédentes, dans laquelle la chaîne alkyle des monomères ii) contient 11 à 22 atomes de carbone.

5. Dispersion aqueuse suivant l'une quelconque des revendications précédentes, dans laquelle une quantité de 1 ppm à 5 % en poids des monomères à insaturation éthylénique copolymérisés comprend un monomère divinylique.

6. Dispersion aqueuse suivant la revendication 5, dans laquelle le monomère divinylique représente une quantité de 1 ppm à 1 %.

7. Dispersion aqueuse suivant l'une quelconque des revendications précédentes, dans laquelle les groupes fonctionnels carboxyle sont neutralisés au moins partiellement.

8. Procédé pour la production d'une dispersion aqueuse de microparticules de copolymère, utile comme épaississant associatif, qui comprend les étapes consistant à
a) à former une mini-émulsion aqueuse de gouttelettes d'un mélange de monomères à insaturation éthylénique ayant un diamètre moyen de gouttelette allant jusqu'à 5 micromètres, en présence d'un agent tensio-actif, mélange qui comprend sur base pondérale (sur la base du poids total du mélange)
i) 10 à 90 % de monomères à fonctionnalité carboxyle
ii) 1 à 50 % d'un monomère ester alkylique à chaîne longue d'acrylate ou de méthacrylate dans lequel la chaîne alkyle contient au moins 11 atomes de carbone
iii) 0 à 89 % d'un monomère acrylate ou méthacrylate à chaîne courte choisi entre l'acrylate de méthyle, l'acrylate d'éthyle, le méthacrylate de méthyle, le méthacrylate d'éthyle et
iv) facultativement, d'autres monomères à insaturation éthylénique
b) à amener ladite mini-émulsion à subir une copolymérisation et à former une dispersion de microparticules de copolymère et
c) facultativement, à neutraliser au moins partiellement la dispersion avec une base.

9. Procédé pour la production d'une dispersion aqueuse de microparticules de copolymère, utile comme épaississant associatif, qui comprend les étapes consistant
a) à introduire dans un récipient contenant de l'eau et un agent tensio-actif des monomères comprenant
i) 10 à 90 % de monomères à fonctionnalité carboxyle
ii) 1 à 50 % d'un monomère ester alkylique à chaîne longue d'acrylate ou de méthacrylate dans lequel la chaîne alkyle contient au moins 11 atomes de carbone
iii) 0 à 89 % d'un monomère acrylate ou méthacrylate à chaîne courte choisi entre l'acrylate de méthyle, l'acrylate d'éthyle, le méthacrylate de méthyle, le méthacrylate d'éthyle et
iv) facultativement, d'autres monomères à insaturation éthylénique
b) à former une macro-émulsion des monomères i), ii), iii) et iv) dans de l'eau et un agent tensio-actif
c) à microniser la macro-émulsion pour former une mini-émulsion ayant un diamètre moyen de gouttelette inférieur à 5 micromètres
d) à amener la mini-émulsion à subir une copolymérisation et à former une dispersion aqueuse de microparticules de copolymère de haut poids moléculaire ayant un diamètre moyen de particule inférieur à 5 micromètres et
e) facultativement, à effectuer une neutralisation au moins partielle avec une base.

10. Composition aqueuse de revêtement, ladite composition contenant la dispersion aqueuse suivant l'une quelconque des revendications 7, 8 et 9.

11. Composition aqueuse de revêtement suivant la revendication 10, la composition contenant également au moins un constituant choisi dans le groupe consistant en un polymère filmogène, des pigments, des dispersants, des diluants, des agents de réticulation, des agents anti-mousse, des adjuvants de coalescence, des adjuvants d'écoulement et des biocides.
